# EUROPEAN PATENT APPLICATION

(11) **EP 3 547 647 A1**
(43) Date of publication of application: **02.10.2019**
(21) Application number: 18305377.6
(22) Date of filing: 30.03.2018
(51) Int. Cl.: H04L 29/08, H04L 29/06

(54) **METHOD AND CLIENT TERMINAL FOR RETRIEVING A RESOURCE STORED ON A NETWORK EQUIPMENT**

(71) Applicant: InterDigital CE Patent Holdings, 75017 Paris (FR)
(72) Inventor: BICHOT, Guillaume, 35576 Cesson-Sévigné (FR); GOUACHE, Stéphane, 35576 Cesson-Sévigné (FR); LE SCOUARNEC, Nicolas, 35576 Cesson-Sévigné (FR)
(74) Representative: Huchet, Anne

(57) **Abstract**

A client terminal configured for retrieving a resource stored on a network equipment (S) adapted to be in connection with the client terminal (C) through a communication network (N), the client terminal (C) comprising one or more memories (103) and one or more processors (104) configured to send (401) a request for receiving (402) the resource from the network equipment (S),
wherein the request further comprises a header for receiving, from the network equipment (S), the resource in reverse order.

## Description

### TECHNICAL FIELD

The present disclosure is directed to the transmission of resources over a communication network and, in particular but not necessarily, between a requesting client terminal and a remote content server.

### BACKGROUND

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

HTTP is the protocol used for accessing information and resources on the World Wide Web. HTTP is based on request-response messages allowing clients to request resources from remote servers arranged in the cloud.

A HTTP request essentially comprises a method or command (e.g. GET, POST, HEAD), a requested resource and a protocol version. Such a request can be further qualified by the addition of one or several headers allowing a client to ask a server to handle the request in a specific manner and/or to trigger specific behavior(s) from the server. In particular, a client can specify, for a document, the language it wishes to retrieve it and, for an image, the image format, the desired type of compression and so on. An example of a HTTP request is given below:
*GET*/*index.html HTTP*/*1.1*
*Host: www.example.com*

In this example, the "Host"header indicates the server hostname, allowing for a single machine to run multiple HTTP server instances reachable via different names.

While it is possible to access byte ranges of a resource resulting in the creation of slices of the resource at the server side thanks to a *"Range"* header, there is currently no means for a client to receive the resource in reverse order (from the end of a corresponding file to the beginning of the later). With the *"Range"* header, the client has to send multiple requests to retrieve the whole resource or part of it and needs to operate a reception buffer for reassembling the received responses and finally read the buffer from the end. For instance, a byte range request of a resource (for requesting a slice of the resource) according to the HTTP protocol can be defined as follows:
*GET*/*index.html HTTP*/*1.1*
*Host: www.example.com*
*Range: bytes=500-999*

By combining multiple byte range requests and reassembling the received responses, it is possible for the client to retrieve parts of the resource arranged near the end, before retrieving the parts of the resource arranged at the beginning of the later. This is however much more complicated to implement for the client as it has to issue multiple requests and to deal with multiple responses while handling possible errors. Besides, the client has to determine the full length of the resource in order to be able to specify a range close to the end, for instance, by using a "*HEAD*" method usually implemented to retrieve the characteristics of a resource. This adds up another request to the multiple requests the client already needs to handle to retrieve the resource and thus increase applicative latency.

Such a solution implies more load on the server (since it has to handle multiple requests received from the client for a single resource) and more complexity and latency at the client (since the client has to run a reassembly operation, by operating a buffer, before being able to read the resource in reverse mode).

The present disclosure has been devised with the foregoing in mind.

### SUMMARY

The disclosure concerns a method for retrieving a resource stored on a network equipment, comprising sending, by a client terminal, a request for receiving the resource from the network equipment, the client terminal being configured to be in connection with the network equipment through a communication network, wherein the request further comprises a header for receiving, from the network equipment, the resource in reverse order.

According to an embodiment, the request can be compliant with a transfer protocol.

According to an embodiment, the transfer protocol can be the HTTP protocol.

According to an embodiment, the header can be defined by a value for adapting the behaviour of the network equipment so as to receive the resource in reverse order.

The disclosure further concerns a client terminal configured for retrieving a resource stored on a network equipment adapted to be in connection with the client terminal through a communication network, the client terminal comprising one or more memories and one or more processors configured to send a request for receiving the resource from the network equipment,
wherein the request further comprises a header for receiving, from the network equipment, the resource in reverse order.

According to an embodiment, the request can be compliant with a transfer protocol.

According to an embodiment, the transfer protocol can be the HTTP protocol.

According to an embodiment, the header can be defined by a value for adapting the behaviour of the network equipment so as to receive the resource in reverse order.

The present disclosure also concerns a method for sending a resource stored on a network equipment upon receipt of a request for the resource from a client terminal configured to be in connection with the network equipment through a communication network,
wherein the request further comprises a header for sending the resource to the client terminal in reverse order.

In addition, the disclosure is further directed to a network equipment configured to send, upon receipt of a request, a resource to a client terminal adapted to be in a communication with the network equipment, the network equipment comprising one or more memories and one or more processors configured to process the request and to send the resource to the client terminal,
wherein the request further comprises a header for sending the resource to the client terminal in reverse order.

Besides, the disclosure concerns a data carrier signal carrying a request processed by the method for retrieving a resource as previously specified, wherein the request comprises a header for receiving, from the network equipment, the resource in reverse order.

The present disclosure is further directed to a non-transitory processor readable medium having stored therein instructions for causing a processor to perform at least the steps of a method for retrieving a resource stored on a network equipment, comprising sending, by a client terminal, a request for receiving the resource from the network equipment, the client terminal being configured to be in connection with the network equipment through a communication network,
wherein the request further comprises a header for receiving, from the network equipment, the resource in reverse order.

Furthermore, the present disclosure also concerns a computer program product comprising instructions to cause the client terminal as described above to perform the steps of the method for retrieving a resource as previously specified.

The methods according to the disclosure may be implemented in software on a programmable apparatus. They may be implemented solely in hardware or in software, or in a combination thereof.

Some processes implemented by elements of the present disclosure may be computer implemented. Accordingly, such elements may take the form of an entirely hardware embodiment, an entirely software embodiment (including firmware, resident software, micro-code, etc.) or an embodiment combining software and hardware aspects that may all generally be referred to herein as "circuit", "module" or "system". Furthermore, such elements may take the form of a computer program product embodied in any tangible medium of expression having computer usable program code embodied in the medium.

Since elements of the present disclosure can be implemented in software, the present disclosure can be embodied as computer readable code for provision to a programmable apparatus on any suitable carrier medium. A tangible carrier medium may comprise a storage medium such as a floppy disk, a CD-ROM, a hard disk drive, a magnetic tape device or a solid state memory device and the like.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### BRIEF DESCRIPTION OF THE DRAWINGS

The disclosure will be better understood and illustrated by means of the following embodiment and execution examples, in no way limitative, with reference to the appended figures on which:
- Figure 1 is a schematic diagram of an exemplary network architecture wherein the present principles can be implemented;
- Figure 2 shows a schematic block diagram of an exemplary client terminal compliant with the present principles;
- Figure 3 shows a schematic block diagrams of an exemplary network equipment wherein the present principles may be implemented;
- Figure 4 is a flow chart of an exemplary method used by some embodiments of the present principles for retrieving a resource.

Wherever possible, the same reference numerals will be used throughout the figures to refer to the same or like parts.

### DETAILED DESCRIPTION

The following description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

In the claims hereof, any element expressed as a means and/or module for performing a specified function is intended to encompass any way of performing that function including, for example, a) a combination of circuit elements that performs that function or b) software in any form, including, therefore, firmware, microcode or the like, combined with appropriate circuitry for executing that software to perform the function. It is thus regarded that any means that can provide those functionalities are equivalent to those shown herein.

In addition, it is to be understood that the figures and descriptions of the present disclosure have been simplified to illustrate elements that are relevant for a clear understanding of the present disclosure, while eliminating, for purposes of clarity, many other elements found in typical resource delivery methods, devices and systems. However, because such elements are well known in the art, a detailed discussion of such elements is not provided herein. The disclosure herein is directed to all such variations and modifications known to those skilled in the art.

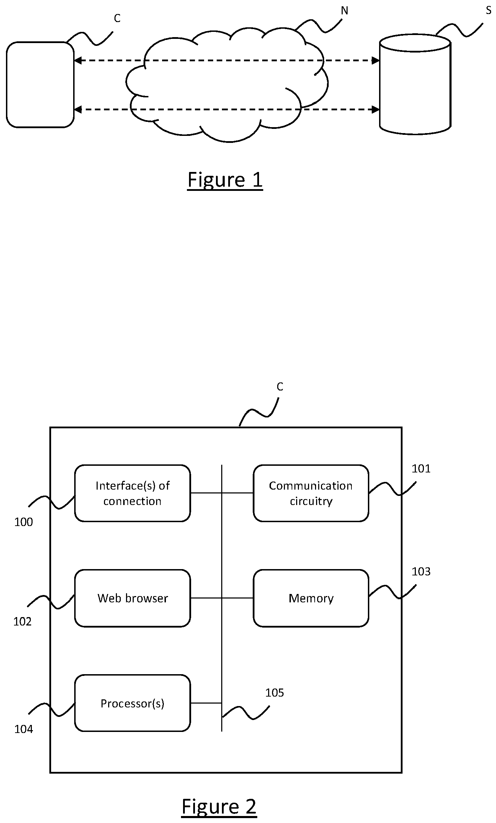

As shown in Figure 1, the present principles are described, in an illustrative but non-limitative embodiment, with reference to a network architecture supporting the HTTP (Hyper Text Transfer Protocol) protocol in any version of HTTP/1.1 or HTTP/2 used for transferring data over the Internet network. Naturally, the present principles is not limited to such a particular environment and other transfer protocol such as FTP (File Transfer Protocol) or other "web" protocols such as SPDY (precursor of HTTP/2) and QUIC (a variant that merges transport (UDP), security (TLS) and applicative (HTTP2-like) in a single protocol) might be implemented without departing from the scope of the present principles.

In Figure 1, the exemplary Client-Server network architecture, supported by a network N, comprises one or several client terminals C (only one client terminal is represented in the Figure 1) and one network equipment (e.g. a content server implementing the HTTP protocol).

The client terminal C wishes to obtain a resource (e.g. a multimedia content such as a video or an image) from the remote server S through the Internet network N. It should be noted that the present principles further apply to a network different from the Internet.

According to an illustrative but non-limitative embodiment of the present principles described in Figure 2, a client terminal C comprises at least:
- one or more interfaces of connection 100 (wired and/or wireless, as for example Wi-Fi, Ethernet, etc.) to the network N;
- one communication circuitry 101 comprising the protocol stacks to communicate with a HTTP server S. In particular, the communication circuitry 101 comprises the TCP/IP stack well known in the art. Of course, it could be any other type of network and/or communicating means enabling the client terminal C to communicate with a HTTP server S;
- a web browser 102 to request a multimedia content to a remote server S thanks to the HTTP protocol. When the client terminal C needs to access the server S to obtain a resource, it needs to know the Internet Protocol (IP) address corresponding to the server providing this resource. Usually, the browser initially knows a so-called URL (Uniform Resource Locator) or FQDN (Fully Qualified Domain Name). A translation of the URL or the FQDN into an actual IP address is performed by a device such as a Domain Name System server, on the basis of the URL or FQDN provided by the client terminal. Once the browser knows the IP address of the device hosting the resource, i.e. the web server, it sets up a connection to this IP address and sends requests for the required information using e.g. the HTTP protocol. The web server responds with an HTML (Hyper Text Markup Language) webpage, a picture, a video file or some other data;
- one or more memories 103 (e.g. RAM, ROM, EPROM, etc.) for buffering and/or storing data received from a HTTP server S;
- one or more processors 104 for executing the applications and programs stored in a non-volatile memory of the client terminal C;
- an internal bus 105 to connect the various modules and all means well known to the skilled in the art for performing the generic client functionalities.

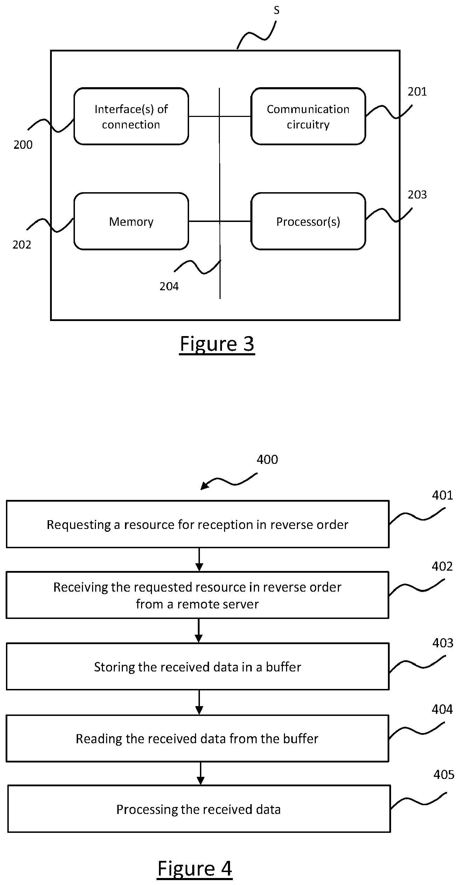

As shown in the example of Figure 3, a server S can comprise at least:
- one or more interfaces of connection 200 (wired and/or wireless) to the network N;
- a communication circuitry 201 to deliver data to one or several requesting client terminals. In particular, the communication circuitry 201 can comprise the TCP/IP stack well known in the art. Of course, it could be any other type of network and/or communicating means enabling the server S to communicate with a client terminal C;
- one or more memories 202 (e.g. RAM, ROM, EPROM, etc.) for storing resources, applications and/or programs;
- one or more processor(s) 203 for executing the applications and programs stored in a non-volatile memory of the server S;
- a web server 204 configured for transferring resources upon request from client terminals, for instance, thanks to the HTTP protocol;
- an internal bus 205 to connect the various modules and all means well known to the skilled in the art for performing the generic server functionalities.

According to the present principles, as shown in Figure 4, the client C can be configured to implement (for instance thanks to its processor(s) 104) a method 400 for retrieving a resource from the server S in reverse order (e.g. from the last byte to the first byte when considering a file, or from last word to first word when considering file with word-based (16-bit words, 32-bit words) addressing).

In a step 401, the client terminal C requests a resource (such as a multimedia content) by sending a request message to the remote server S wherein it is specified the wish to receive the resource in reverse order. With the implementation of the HTTP protocol, the HTTP request message can comprise a command (e.g. *GET, POST, HEAD*)*,* the requested resource and a protocol version.

In an illustrative but non-limitative example, such a HTTP request message can be specified as follows:
*GET* /*index.html HTTP*/*1.1*
*Host: www.example.com*
*Access: reverse*
wherein:
- "*GET*" is a HTTP command;
- *"index.html"* is the requested resource;
- "*HTTP*/*1.1*" corresponds the version of the HTTP protocol;
- "*www.example.com*" corresponds the server hostname;
- "Access" is an HTTP header for indicating (thanks to the value *"reverse"*) that the client terminal C wishes to receive the resource from a server S in reverse order.

Thus, considering HTTP/1.1, the HTTP header "*Access*" followed by the value *"reverse"* allows the client terminal for indicating, in its request message, that the requested resource has to be received in reverse order. Aka, upon receipt of the request message sent by the client terminal C, the HTTP server S is configured to handle the request as usual except that it fills the response body starting with the last byte of the requested resource and moving backwards, from the end of the resource to the beginning of the later. Another illustrative but non-limitative example of the HTTP header compliant with present principles might be an HTTP header *"Reverse"* followed by the value *"true"* so as to receive the resource in reverse order.

In a complement, the HTTP header *"Access"* can be completed by one or more optional parameters or constraints, such as the length or the size of the returned data (e.g. *"Access: reverse*/*16"* for returning 16 bits). In case of implementation of such parameter(s) or constraint(s), when no value is provided by the client terminal in its request, a default value can be used by the server (e.g. 8 bits, 1 byte).

It should be understood that HTTP header "*Access*" will be adapted (in case the considered protocol is not HTTP/1.1) by its binary equivalent for binary protocols (such as HTTP/2 or QUIC).

In the illustrative example, by assuming that the resource *"index.htmf"* stored on the server S contained *"Hello, world!",* the server S is the configured to reply with the following response:
*HTTP*/*1.1 200 OK*
*Content-type: text*/*plain*
*Date: Tue, 18 May 2017 17:28:45 GMT*
*Content-Length: 15*
*!dIrow,olleH*

The server S returns the requested resource in reverse order (i.e. the server adapts its behavior due to the presence of the header *"Access"* embedded in the received request). If a file was requested, it would start building the response from the last byte of the file and proceed backwards toward the beginning of the file.

The client terminal C receiving, in a step 402, the response from the server S can then (in a step 404) start reading a buffer 103 (wherein the received data can be stored in a step 403) from the first byte received, knowing that the order has been reversed by the server S.

The header *"Access"* is particularly useful when a client wishes, for instance, to display (in a step 405) a resource starting from the end. For instance, a log viewer application could want to retrieve the last entries first and proceed backwards through the contents as the user reads through. In the case of a video application, one would expect it to be possible to start decoding the end of a video stream (for example for preview purposes) without having to download the entire video file beforehand.

The server S has then a single request to handle and the computational cost compared to replying with the "normal" content is nearly zero. From the client side, there is a single request to issue to request the reception of the resource in reverse order, and the response bytes can be processed immediately as they are received.

References disclosed in the description, the claims and the drawings may be provided independently or in any appropriate combination. Features may, where appropriate, be implemented in hardware, software, or a combination of the two.

Reference herein to "one embodiment" or "an embodiment" means that a particular feature, structure, or characteristic described in connection with the embodiment can be included in at least one implementation of the method and device described. The appearances of the phrase "in one embodiment" in various places in the specification are not necessarily all referring to the same embodiment, nor are separate or alternative embodiments necessarily mutually exclusive of other embodiments.

Reference numerals appearing in the claims are by way of illustration only and shall have no limiting effect on the scope of the claims.

Although certain embodiments only of the disclosure have been described herein, it will be understood by any person skilled in the art that other modifications, variations, and possibilities of the disclosure are possible. Such modifications, variations and possibilities are therefore to be considered as falling within the scope of the disclosure and hence forming part of the disclosure as herein described and/or exemplified.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

## Claims

1. A method for retrieving a resource stored on a network equipment (S), comprising sending (401), by a client terminal (C), a request for receiving the resource from the network equipment (S), the client terminal (C) being configured to be in connection with the network equipment (S) through a communication network (N), wherein the request further comprises a header for receiving (402), from the network equipment (S), the resource in reverse order.

2. The method according to claim 1, wherein the request is compliant with a transfer protocol.

3. The method according to claim 2, wherein the transfer protocol is the HTTP protocol.

4. The method according to claim 2 or 3, wherein the header is defined by a value for adapting the behaviour of the network equipment so as to receive the resource in reverse order.

5. A client terminal configured for retrieving a resource stored on a network equipment (S) adapted to be in connection with the client terminal (C) through a communication network (N), the client terminal (C) comprising one or more memories (103) and one or more processors (104) configured to send (401) a request for receiving (402) the resource from the network equipment (S),
wherein the request further comprises a header for receiving, from the network equipment (S), the resource in reverse order.

6. The client terminal according to claim 5, wherein the request is compliant with a transfer protocol.

7. The client terminal according to claim 6, wherein the transfer protocol is the HTTP protocol.

8. The client terminal according to claim 6 or 7, wherein the header is defined by a value for adapting the behaviour of the network equipment so as to receive the resource in reverse order.

9. A method for sending a resource stored on a network equipment (S) upon receipt of a request for the resource from a client terminal (C) configured to be in connection with the network equipment (S) through a communication network (N), wherein the request further comprises a header for sending the resource to the client terminal (C) in reverse order.

10. A Network equipment configured to send, upon receipt of a request, a resource to a client terminal (C) adapted to be in a communication with the network equipment (S), the network equipment (S) comprising one or more memories and one or more processors configured to process the request and to send the resource to the client terminal (C),
wherein the request further comprises a header for sending the resource to the client terminal (C) in reverse order.

11. A data carrier signal carrying a request processed by the method (400) of claim 1, wherein the request comprises a header for receiving (402), from the network equipment (S), the resource in reverse order.

12. A non-transitory processor readable medium having stored therein instructions for causing a processor to perform at least the steps of a method (400) for retrieving a resource stored on a network equipment (S), comprising sending (401), by a client terminal (C), a request for receiving (402) the resource from the network equipment (S), the client terminal (C) being configured to be in connection with the network equipment (S) through a communication network (N),
wherein the request further comprises a header for receiving, from the network equipment (S), the resource in reverse order.

13. A computer program product comprising instructions to cause the client terminal (C) of claims 5 to 8 to perform the steps of the method of claims 1 to 4.
